# EUROPEAN PATENT SPECIFICATION

(11) **EP 0 926 365 B1**
(45) Date of publication and mention of the grant of the patent: **28.11.2001**
(21) Application number: 98123505.4
(22) Date of filing: 15.12.1998
(51) Int. Cl.: F16C 23/08, F16C 35/067, F16C 35/02

(54) **Self-centering support for bearings**
Selbstzentrierende Lagertraeger
Support de palier à autoréglage

(30) Priority: 23.12.1997 IT PD970294
(43) Date of publication of application: 30.06.1999
(73) Proprietor: M.G. - MINI GEARS S.p.A., 35127 Padova (IT)
(72) Inventor: Segato, Angelo, 35010 Vigonza (prov. of Padova) (IT)
(74) Representative: Modiano, Guido, Dr.-Ing.

(56) References cited:
- US-A- 3 936 100
- US-A- 4 228 210
- US-A- 5 017 022
- US-A- 5 439 299

## Description

The present invention relates to a support for bearings.

Conventional supports for bearings are now widely used which allow to obtain mechanically and constructively adequate locking for the bearings.

Rolling bearings in particular, require in fact precise fitting with safe couplings allowing them to express their features to their fullest extent.

Moreover, stresses that are not compatible with those that can be withstood by the structure of the bearings can induce malfunctions in the bearings and even break them in the worst cases.

However, the possibility to fit bearings in the intended positions with an easy and quick assembly is particularly useful and appreciable from the constructive point of view as well.

Particular supports are known for this purpose, among the various bearing supports, which are constituted by two half-shells forming, through mutual cooperation, a seat with walls which are contoured so as to cause the bearing arrangement to be self-centering.

In particular, a first half-shell has a seat which is shaped exactly complementarily to the outside diameter of the bearing, while a second half-shell has a seat provided with a larger diameter.

Moreover, the two half-shells are shaped so as to have play, and have protruding wings provided with holes for the locking bolts; the wings of the second half-shell have slotted holes.

When the half-shells are tightened, the second half-shell initially makes contact only along a median line.

As the tightening action continues, the screws tend to reduce the play between the wings of the half-shells, thus deforming the second half-shell and gradually increasing the contact of the second half-shell with the bearing until full contact is achieved.

The presence of the slotted holes allows the wings to adapt by moving towards the bearing as the corresponding half-shell makes fuller contact.

However, these supports, besides having constructive problems related to the correct choice of the diameters, of the plays and of the slotted holes to allow adaptability, do not always achieve a safe seating of the bearing meant for them.

The aim of the present invention is to provide a support for bearings which allows said bearings to have a seating which is firm and precise in terms of position and also allows adequate operation of the installed bearings.

Within the scope of this aim, an object of the present invention is to provide a support for bearings which allows simple and reliable assembly of its components and installation of the bearing.

Another object of the present invention is to provide a support which is strong and adapted to make the bearing operate appropriately.

Another object of the present invention is to provide a support whose costs are competitive with respect to commercially available supports.

Another object of the present invention is to provide a support which can be manufactured with known technologies and equipment.

This aim, these objects and others which will become apparent hereinafter are achieved by a support for bearings, which comprises two half-shells which can be reversibly connected and are provided with corresponding cavities which are adapted to form a seat for a bearing, characterized in that at least one of said cavities is shaped so as to form three radial raised portions for the contact of said bearing along corresponding imaginary lines which are parallel to the rotation axis of said bearing.

Further characteristics and advantages of the present invention will become apparent from the following detailed description of an embodiment thereof, illustrated only by way of non-limitative example in the accompanying drawings, wherein:
Figure 1 is a sectional view of a support according to the invention;
Figure 2 is a sectional perspective view of one of the two half-shells that compose the support of Figure 1.

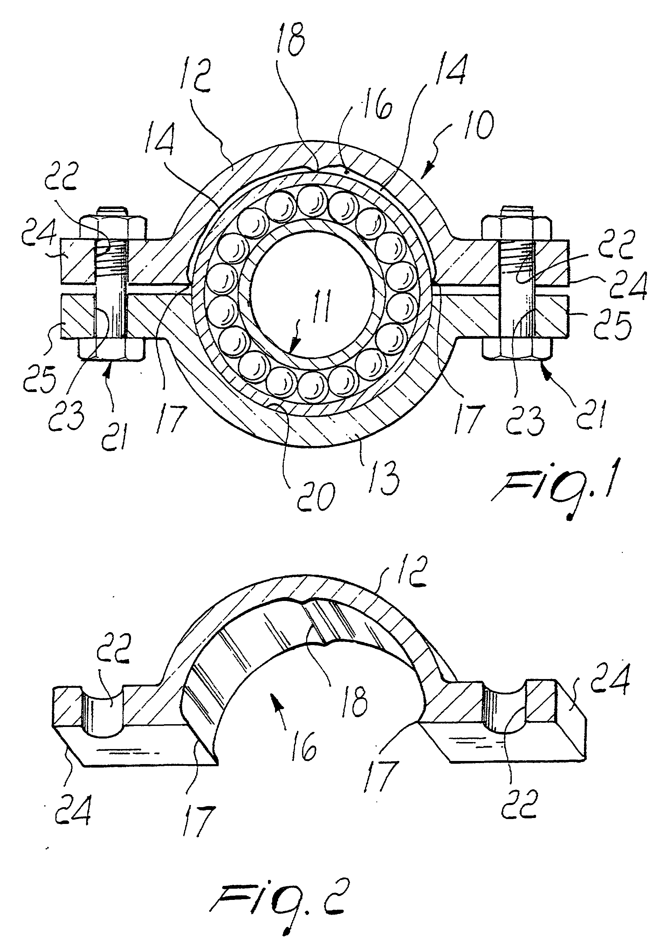

With particular reference to Figures 1 and 2, a bearing support according to the invention is generally designated by the reference numeral 10.

In particular, in this case the support 10 accommodates a ball bearing which is generally designated by the reference numeral 11.

The support 10 comprises two half-shells 12 and 13 provided with respective cavities which are adapted to form a seat for accommodating the bearing 11.

In particular, in this case, a first cavity 16, related to the half-shell 12, is shaped so as to form three mutually equidistant radial raised portions which converge at the center to lock the bearing 11 along three imaginary lines which are parallel to the rotation axis of said bearing.

The regions 14 between the raised portions are conveniently filled with adhesive for fixing to the bearing 11.

The particular shape of the first cavity 16 is produced by a corresponding shaping of the production die (in this case a pressure die-casting die), which is obtained by electrical discharge machining.

In this case, two first lateral raised portions 17 lie with mutually opposite orientations on a plane which is substantially parallel to the joining plane of the half-shells 12 and 13, while a third central raised portion 18 is substantially perpendicular to the other two.

A second cavity 20, related to the half-shell 13 which is to be assembled to the half-shell 12, is instead substantially semicircular, so as to lie mutually opposite to the first two raised portions 17 and the third raised portion 18.

In this embodiment, the half-shells 12 and 13 are connected by bolts 21 which are arranged in corresponding through holes 22 and 23 which are provided in wings, designated by the reference numerals 24 and 25 respectively, which protrude from the half-shells 12, 13 and face each other on the joining plane.

The holes 22 of the wings 24 are of course aligned with the holes 23 of the wings 25 in order to allow the passage of the bolts 21.

In practice it has been observed that the present invention has achieved the intended aim and objects.

In particular, it should be observed that the particular shape of the cavity of at least one of the half-shells allows perfect bearing centering without however requiring further adaptations during the mutual connection of the half-shells.

Accordingly, the presence of slotted holes is not needed.

It should also be observed that the shaping of the seat thus obtained allows a seating of the bearing which is reliable and perfectly adequate in terms of both mechanical stresses transferred from and to the bearing and of construction and assembly.

It should also be observed that the support according to the invention is structurally extremely simple and can therefore be manufactured at competitive costs with respect to conventional supports.

The present invention is susceptible of modifications and variations, which are within the scope of the inventive concept.

The technical details can be replaced with other technically equivalent elements.

The materials as well as the dimensions may be any according to requirements.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A support (10) for bearings, comprising two half-shells (12, 13) which can be reversibly connected and are provided with corresponding cavities (16, 20) which are adapted to form a seat for a bearing (11), **characterized in that** at least one of said cavities (16) is shaped so as to form three radial raised portions (17, 18) for the contact of said bearing (11) along corresponding imaginary lines which are parallel to the rotation axis of said bearing (11).

2. The support according to claim 1, **characterized in that** it comprises two first raised portions (17) of said three raised portions (17, 18) are diametrically mutually opposite on a plane which is substantially parallel to the plane on which said half-shells (12, 13) are joined.

3. The support according to claim 2, **characterized in that** a third raised portion (18) of said three raised portions (17, 18) is substantially perpendicular to said two first raised portions (17).

4. The support according to claim 3, **characterized in that** said third raised portion (18) is angularly equidistant from said first two raised portions (17).

5. The support according to claim 1, **characterized in that** empty regions (14) are defined between said raised portions (17, 18), said regions (14) being filled with adhesive.

6. The support according to claim 1, **characterized in that** said half-shells (12, 13) are connected by bolts (21) which are arranged in corresponding through holes (22, 23) thereof, said bolts (21) passing through the joining plane.

7. The support according to claim 6, **characterized in that** said through holes (22, 23) are located in wings (24, 25) protruding from said half-shells (12, 13) and facing each other on the joining plane.

## Patentansprüche

1. Halter (10) für Lager, mit zwei Halbschalen (12,13), die umkehrbar miteinander verbunden werden können und mit entsprechenden Mulden (16, 20) versehen sind, die dazu eingerichtet sind, einen Sitz für ein Lager (11) zu bilden, **dadurch gekennzeichnet, dass** zumindest eine der genannten Mulden (16) so geformt ist, dass sie drei radial erhöhte Teile (17, 18) für die Berührung des genannten Lagers (11) entlang entsprechender imaginärer Linien bilden, die zu der Drehachse des genannten Lagers (11) parallel sind.

2. Halter nach Anspruch 1, **dadurch gekennzeichnet, dass** er von den genannten drei erhöhten Teilen (17, 18) zwei erste erhöhte Teile (17) aufweist, welche zueinander diametral gegenüberliegend in einer Ebene liegen, die im wesentlichen parallel zur Ebene ist, an der die genannten Halbschalen (12, 13) verbunden sind.

3. Halter nach Anspruch 2, **dadurch gekennzeichnet, dass** ein dritter erhöhter Teil (18) der genannten drei erhöhten Teile (17, 18) im wesentlichen senkrecht zu den genannten zwei ersten erhöhten Teilen (17) angeordnet ist.

4. Halter nach Anspruch 3, **dadurch gekennzeichnet, dass** der genannte dritte erhöhte Teil (18) winkelmäßig äquidistant von den genannten zwei ersten erhöhten Teilen (17) gelegen ist.

5. Halter nach Anspruch 1, **dadurch gekennzeichnet, dass** leere Bereiche (14) zwischen den genannten erhöhten Teilen (17, 18) definiert sind, wobei die genannten Bereiche (14) mit Klebstoff gefüllt sind.

6. Halter nach Anspruch 1, **dadurch gekennzeichnet, dass** die genannten Halbschalen (12, 13) durch Schrauben (21) verbunden sind, die in entsprechenden Durchgangslöchern (22, 23) derselben angeordnet sind, wobei genannte Schrauben (21) sich durch die Verbindungsebene hindurch erstrecken.

7. Halter nach Anspruch 6, **dadurch gekennzeichnet, dass** die genannten Durchgangslöcher (22, 23) in Flügeln (24, 25) gelegen sind, die sich von den genannten Halbschalen (12, 13) vorstehend erstrecken und an der Verbindungsebene einander gegenüber liegen.

## Revendications

1. Support (10) pour paliers, comprenant deux demi-coquilles (12, 13) pouvant être raccordées de manière réversible et qui comportent des cavités correspondantes (16, 20) conçues pour former une selle d'appui d'un palier (11), **caractérisé en ce qu'**au moins une des dites cavités (16) présente une forme lui permettant de former trois parties radiales relevées (17, 18) destinées à se trouver au contact du dit palier (11) le long de lignes imaginaires correspondantes qui sont parallèles à l'axe de rotation du dit palier (11).

2. Support selon la revendication 1, **caractérisé en ce qu'**il comprend deux premières parties relevées (17) des dites trois parties relevées (17, 18) qui sont en opposition diamétrale mutuelle sur un plan qui est sensiblement parallèle au plan sur lequel les dites demi-coquilles (12, 13) sont réunies.

3. Support selon la revendication 2, **caractérisé en ce qu'**une troisième partie relevée (18) des dites trois parties relevées (17, 18) est sensiblement perpendiculaire aux dites deux premières parties relevées (17).

4. Support selon la revendication 3, **caractérisé en ce que** la dite troisième partie relevée (18) est angulairement équidistante des dites deux premières parties relevées (17).

5. Support selon la revendication 1, **caractérisé en ce que** des zones vides (14) sont définies entre les dites parties relevées (17, 18), les dites zones (14) étant remplies d'une matière adhésive.

6. Support selon la revendication 1, **caractérisé en ce que** les dites demi-coquilles (12, 13) sont raccordées par des boulons (21) qui sont disposés dans leurs trous traversants correspondants (22, 23), les dits boulons (21) traversant le plan de réunion.

7. Support selon la revendication 6, **caractérisé en ce que** les dits trous traversants (22, 23) sont situés dans des oreilles (24, 25) faisant saillie par rapport aux dites demi-coquilles (12, 13) et se faisant face les unes aux autres sur le plan de réunion.
